# EUROPEAN PATENT SPECIFICATION

(11) **EP 1 888 793 B1**
(45) Date of publication and mention of the grant of the patent: **10.05.2017**
(21) Application number: 06744338.2
(22) Date of filing: 01.06.2006
(51) Int. Cl.: C21C 5/52, C21C 5/46, C21C 7/068

(54) **MANUFACTURE OF FERROALLOYS**
HERSTELLUNG VON FERROLEGIERUNGEN
PRODUCTION DE FERROALLIAGES

(30) Priority: 10.06.2005 GB 0511883
(43) Date of publication of application: 20.02.2008
(73) Proprietor: The BOC Group Limited, The Surrey Research Park Guildford Surrey GU2 7XY (GB)
(72) Inventor: CAMERON, Andrew Miller, Matlock Derbyshire DE4 5WA (GB)
(74) Representative: Christie, Gemma Louise
(86) International application number: PCT/GB2006/050136
(87) International publication number: WO 2006/131764

(56) References cited:
- EP-A- 0 866 139
- WO-A-03/104508
- US-A- 4 426 224
- US-A- 4 919 714
- US-B1- 6 322 610
- PATENT ABSTRACTS OF JAPAN vol. 014, no. 544 (C-0784), 4 December 1990 (1990-12-04) -& JP 02 232312 A (KAWASAKI STEEL CORP), 14 September 1990 (1990-09-14)
- PATENT ABSTRACTS OF JAPAN vol. 017, no. 037 (C-1019), 25 January 1993 (1993-01-25) -& JP 04 254510 A (NIPPON STEEL CORP), 9 September 1992 (1992-09-09)
- PATENT ABSTRACTS OF JAPAN vol. 009, no. 005 (C-260), 10 January 1985 (1985-01-10) -& JP 59 159963 A (KAWASAKI SEITETSU KK), 10 September 1984 (1984-09-10)
- HABASHI F ED - HABASHI F (ED): "Handbook of Extractive Metallurgy, PASSAGE" 1997, HANDBOOK OF EXTRACTIVE METALLURGY. METAL INDUSTRY, FERROUS METALS, WEINHEIM, VCH, DE, PAGE(S) 310-312,435 , XP002256075 pages 311,312; figures 6.61-6.63

## Description

This invention relates to the manufacture of ferrous alloys ("ferroalloys") from steel scrap, and particularly to the manufacture of stainless steel.

Stainless steel is a low carbon ferrous alloy typically including chromium and nickel as alloying elements. A typical composition contains 18% by weight of chromium, 8% by weight of nickel and less than 0.1 % by weight of carbon, the balance being iron and any other alloying elements (excluding incidental impurities). Stainless steel is typically made by melting a charge of mild steel scrap and high carbon ferroalloys in an electric arc furnace to form a crude alloy containing up to 0.5% by weight more chromium than is desired in the product and having a carbon content in the range of 0.25% to 2.5% by weight and a silicon content in the range of 0.2% to 1.5% by weight. The particular levels of carbon and silicon depend on the product specification, steel making practice and vessel size. The crude alloy is transferred in molten state to a converter in which the molten alloy is blown from beneath the surface of the molten metal with oxygen so as to oxidise the carbon content of the resultant stainless steel to less than 0.1% by weight. In many cases submerged blowing is supplemented by the use of a top lance to deliver additional oxygen for part of the refining cycle.

As the carbon level progressively decreases during the blow so there is a tendency for the oxygen to react with the chromium to form chromium oxide. There is also an associated tendency for an excessive temperature to be created in the converter because of the exothermic nature of the oxidation reactions. In practice, this tendency can be counteracted by adoption of Argon-Oxygen Decarburisation (AOD) practice, whereby the oxygen is progressively, or in steps, diluted with argon so as to reduce the partial pressure of carbon monoxide and so promote oxidation of carbon in preference to oxidation of chromium. By this means most of the chromium is retained in the molten metal. The avoidance of oxidation of chromium helps keep temperatures to an acceptable level, for example to a temperature no higher than 1750°C. Sometimes, additions of non-particulate scrap are made to facilitate temperature control further. In a typical example, the blow is commenced with an oxygen to nitrogen ratio (by volume) of 3:1. This ratio is changed in a series of steps, with argon being substituted for the nitrogen at a given step, to one in which oxygen, rather than argon, is the minor component of the gas mixture. The exact series of gas mixtures and other details of the process depend upon the grade of steel being produced. After the blow, some ferrosilicon can be added to reduce chromium oxide in the slag, and lime can be introduced as a desulphurisation agent.

The Creusot-Loire-Uddeholm (CLU) process may be used as an alternative to the AOD process in order to make stainless steel. The CLU process is analogous to the AOD process but typically uses steam instead of argon to dilute the oxygen that is blown into the melt from beneath its surface.

During the melting of the steel scrap and alloying materials in the electric arc furnace some oxygen atoms may be added in chemically combined form as part of the raw materials, for example if the scrap is in oxidised state, or if an oxygen-containing fluxing agent such as lime or limestone is used. Further, some oxygen and possibly some moisture from the surroundings reacts with the molten metal. As a result a proportion of the alloying elements, particularly the chromium, is oxidised, and as a result the chromium is lost to the slag layer that is formed on top of the molten metal during the melting of the steel scrap in the electric arc furnace.

Not only is the loss of chromium oxide to the slag layer disadvantageous because, in consequence, an unnecessarily large amount of chromium needs to be added to the steel scrap in the electric arc furnace, but it is also disadvantageous because it has an adverse effect on the properties of the slag layer. During conventional operation of an electric arc furnace to form mild steel, rather than an alloyed steel, carbon-containing materials are added to the slag so as to create bubbles of carbon monoxide by reaction between the carbon and reducible oxides in the slag. The formation of the bubbles of carbon monoxide gives rise to a foamy slag. Operation of the electric arc furnace with a foamy slag is recognised to give several advantages over operation with a quiescent slag. In particular, energy consumption is less in the former case and consumption of electrodes and the refractory lining the walls of the furnace is also less in foamy slag operation than in quiescent slag operation. However, the presence of a considerable proportion of an amphoteric oxide such as chromium oxide adds to the viscosity of the slag and reduces the amount of oxygen available for formation of reducible oxides such as ferrous oxide. For practical purposes it is not possible to operate the electric arc furnace with a foamy slag in the manufacture of stainless steel.

WO-A-00/34532 discloses that molten steel can be transferred from the electric arc furnace to the converter via a ladle, and that fine particulate ferrosilicon can be added to the slag in the electric arc furnace before the molten steel and slag are tapped from the furnace. As a result, the ferrosilicon reacts with chromium oxide in the slag and resultant molten chromium metal is formed which descends into the molten metal. Such a procedure is, however, difficult to control satisfactorily. The exact amount of oxygen which enters the melt in the arc furnace cannot be known exactly. If too little silicon is added, the chromium oxide content of the slag will remain too high; if too much silicon is added, the resulting content of silicon in the steel which is transferred to the converter will be too high, thus increasing refining time and increasing the amount of slag that is formed in the converter. WO-A-03/104508 discloses a method of refining a ferroalloy, such as stainless steel, including the step of blowing molecular oxygen or a gas mixture including molecular oxygen into a melt of the ferroalloy, wherein a metallurgically acceptable particulate material, such a ferrochrome or chromite, is introduced from above into the melt, the particulate material being carried into the melt in a first supersonic gas jet which travels to the melt shrouded by a second gas jet. WO-A-03/104508 does not however address problems in initially melting the steel in the electric arc furnace.

According to the present invention there is provided a method according to claim 1.

Introducing particulate chromium and, if desired, other alloying constituents (or their precursors) during the refining step facilitates foamy slag practice at the electric arc furnace by eliminating minimising or keeping down the entry into the slag of species such as chromium oxide that are deleterious to its foaming characteristics, the amount of chromium employed in the melting step may be minimised or eliminated. Hence a sufficiently low viscosity slag forms, which contains an adequate proportion of reducible oxides and hence does not present any difficulty in foaming the slag by a conventional method, for example, by the injection into the slag of particulate carbon from a lance. Indeed, we believe it possible to operate the method according to the invention without any chromium metal, chromium-containing alloy or chromium ore being added to the charge of steel that is melted in the said step (a) (although the steel that is melted may inevitably contain scrap of a kind which includes chromium as an alloying component).

Preferably, the molecular oxygen is ejected from the lance at a supersonic velocity. Use of such a supersonic velocity facilitates penetration of the molecular oxygen into the molten steel and may therefore in turn facilitate rapid reaction between oxygen and carbon in the molten steel. The molecular oxygen is preferably ejected from the lance at a velocity in the range of Mach 1.5 to Mach 4, more preferably at a velocity in the range of Mach 2 to Mach 3.

Typically the first metallurgically acceptable particulate material is conveyed to the lance in a carrier gas. The carrier gas may be pure oxygen, but in order to minimise risk of fire, is preferably air, nitrogen or a noble gas. The first metallurgically acceptable particulate material may be conveyed as a dilute phase or a dense phase.

The lance may simply comprise an arrangement of two pipes, there being a first pipe for ejecting the molecular oxygen and a second pipe for ejecting the first metallurgically acceptable particulate material. Various different configurations of the pipes are possible. For example, the first and second pipes may be coaxial with the first pipe surrounding the second pipe. An advantage of such a configuration is that the first metallurgically acceptable particulate material is able to be introduced into the flow of molecular oxygen ejected from the lance and carried with it into the molten steel. In consequence, there is generally no need to employ a shrouding gas jet, particularly in the form of a flame, as disclosed in WO-A-03/104508. Thus the more complex forms of lance disclosed therein need not be used, although such forms may be advantageous if the additional energy imparted by the flame can be used to aid dissolution or compensate for endothermic reactions.

One of the advantages offered by the method according to the present invention is that if the first metallurgically acceptable particulate material contains a reactive species, it is possible to facilitate the reaction of that species by using the molecular oxygen to create a localised, intensely superheated region in the molten steel into which the first metallurgically acceptable particulate material can be introduced. The higher temperature of such region relative to the average temperature of the molten steel helps to promote more rapid dissolution of the first particulate material and more rapid chemical reactions, thus helping to shorten the overall duration of the refining step in comparison with what it would otherwise be. In addition, increasing temperature favours oxidation of carbon over chrome. By localising the high temperature region, risk of a significantly enhanced rate of wear of refractory materials protecting vessel walls is kept down.

The first metallurgically acceptable particulate material is advantageously ferrochrome. Ferrochrome is an alloy of iron and chromium that contains typically from 5 to 10% by weight of carbon. It is accordingly desirable to introduce into all the ferrochrome into the molten steel during a first part of the refining step and then to reduce the carbon level to an acceptable value in a second part of the refining step in which no ferrochrome is introduced into the molten metal. Preferably the first part of the refining step takes up no more than 60% of the total duration of the refining step. Surprisingly, simulations that we have conducted predict that notwithstanding the high carbon content of ferrochrome, its use as the first particulate material makes possible a shortening of the duration of the refining step in comparison with a comparable conventional method in which no alloying additions are made during the refining step and in which all gas introduced into the molten steel is supplied from tuyeres (which terminate beneath the surface of the molten steel). A contributory factor to this result may be a cooling effect that the particulate ferrochrome has. This cooling effect helps to limit or control the temperature rise resulting from the exothermic reaction between carbon and oxygen to form carbon monoxide. There are two main contributions to the cooling effect. The first is from sensible cooling provided by the ferrochrome. The second is from its enthalpy of melting.

The mean particle size of the first metallurgically acceptable particulate material is preferably less than 5mm. It is particularly preferred that a fine particulate material is used. A fine particulate material is one that if it were simply fed under gravity into a converter, in which the refining step of the method according to the invention is typically performed, it would not penetrate the surface of the molten metal and would therefore have at most only a negligible effect.

The first metallurgically acceptable material may alternatively, but still advantageously, be an ore of chromium, preferably an oxide ore. One such ore is chromite which is a mixed oxide of iron and chromium. The use of such an ore significantly changes the metallurgy of the refining step. Now, it is necessary to reduce the ore in order to release chromium metal. Thus, the chromium ore is dissolved in the molten steel and reacted with a suitable reducing agent. Further, because the reduction of chromium oxide is endothermic, it is desirable to add further fuel, typically in the form of particulate carbon. Accordingly, it is preferred to introduce through the lance into the molten steel a second particulate material comprising a mixture of carbon and at least one deoxidising agent. Suitable deoxidising agents, when metallurgically acceptable, include ferrosilicon, ferromanganese, aluminium and ferroaluminium.

Since stainless steel typically contains other alloying elements in addition to manganese, it is necessary to ensure that the product of the method according to the invention includes any such desired additional alloying element. If desired, such alloying elements may be added to the molten steel during the refining step. Accordingly, a third metallurgically acceptable particulate material selected from sources of such alloying elements is preferably introduced into the molten steel during the refining step. The third metallurgically acceptable particulate material may, for example, comprise at least one of nickel metal, alloys of nickel (for example, ferronickel), nickel ores, molybdenum metal, alloys of molybdenum (for example, ferromolybdenum) and molybdenum ores.

Typically, in the refining step the lance is not the only source of molecular oxygen. Molecular oxygen is typically also blown into the molten steel during the refining step through at least one tuyere terminating below the level of the molten steel. Analogously to conventional stainless steel refining methods, at least one gas other than oxygen may be introduced into the molten steel during the refining step so as to increase the propensity of the refining conditions to favour oxidation of carbon over oxidation of chromium. The other gas may be at least one selected from argon, nitrogen and steam and may be introduced at least in part through the same or a different tuyere from the oxygen. It is also possible to mix with other gas the molecular oxygen that is introduced from the lance into the molten steel. The use of the lance in the method according to the invention can therefore be employed to help control its thermodynamic variables.

The method according to the present invention offers a number of general advantages. It can improve operation of the steel melting operation by conducting the operation under a foamy slag. It makes possible shorter refining times, therefore offering productivity increases. In addition, it can make use of fine particulate materials which might otherwise be waste materials.

The method according to the present invention will now be described by way of example with reference to the accompanying drawings, in which:
Figure 1 is a schematic diagram of a converter that can be used to perform the refining step, and
Figures 2 to 4 are graphs presenting simulated operating parameters for operation of the converter shown in Figure 1.

The first step of the method according to the invention involves melting a batch of mild steel scrap in an electric arc furnace. Melting of steel in an arc furnace is conventional. Typically, a fluxing agent such as lime is added so as to promote the formation of a basic slag. Some alloying elements such as nickel and molybdenum may also be included in the initial charge, although they may both be added at a later stage of the method according to the invention.

Striking an arc in the furnace will cause the steel scrap to melt. Calcium oxide reacts with impurities in the steel to form a basic slag on the surface of the molten steel. The slag typically includes an iron oxide component. In order to render the slag foamy and thereby to obtain the above-mentioned advantages in terms of the operation of the electric arc furnace, a lance is employed to introduce from above a particulate carbonaceous material into the slag. The particulate carbonaceous material is conveyed to the lance in a carrier gas and ejected therefrom at a sufficient velocity that it penetrates the slag layer. The particulate carbon reduces iron oxide in the slag to form carbon monoxide. Bubbles of carbon dioxide are thereby formed. As a result, the slag is rendered foamy.

If desired, one or more oxy-fuel burners may be used to direct heat into the charge so as to reduce the time taken to melt the steel. In general, the operator of the furnace has more latitude in the use of oxy-fuel burners than in a conventional procedure because the relative absence of chromium in the charge makes it possible largely to avoid the increased formation of oxides such as chromium oxide that are difficult to reduce back to the metal.

A further consequence of employing a charge with no or only a low chromium content, is that the addition to it, either before, during or after melting, of ferrosilicon or other deoxidising agent to reduce chromium oxide back to chromium, can be reduced or eliminated altogether.

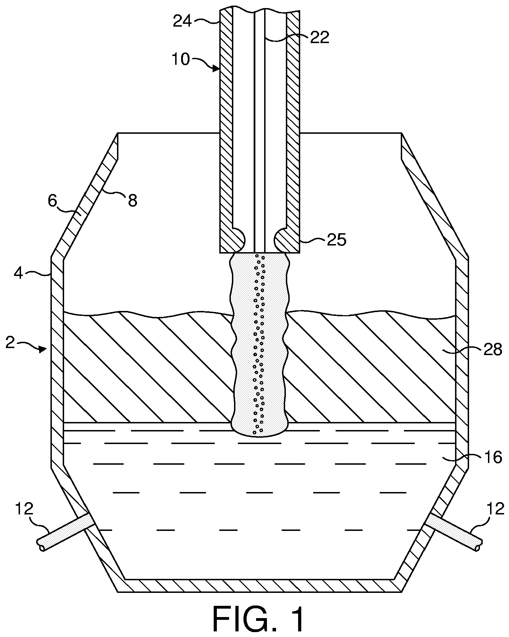

Once the steel scrap has been melted it is typically transferred to a ladle from which it is transferred to a converter of the kind shown in Figure 1. The transfer of molten steel from an electric arc furnace via a ladle to a converter is a standard operation in the manufacture of stainless steel and need not be described further herein.

Referring to Figure 1 of the drawings, a converter 2 is in the form of a vessel 4 having walls 6 provided with an internal refractory lining 8. The vessel is open at its top and is provided with an axial lance 10 which terminates in its interior. In operation the vessel 4 is charged with molten steel which is transferred from the ladle referred to above. The vessel 4 is charged up to a level such that, in operation, a plurality of tuyeres 12 have outlets submerged in a volume 16 of molten steel. The lance 10 comprises two coaxial pipes 22 and 24. The inner pipe 22 is adapted to be placed in communication with a source (not shown) of carrier gas into which a particulate material is able to be fed. The outer pipe 24 is placed in communication with a source (not shown) of commercially pure oxygen. The outer pipe 24 typically terminates in a Laval nozzle 25 and the oxygen is supplied at a pressure such that it is ejected from the Laval nozzle 25 at a supersonic velocity. In operation, the particulate material issuing from the pipe 22 becomes entrained in the jet of oxygen that issues from the Laval nozzle 25 and is carried into the molten steel typically through a layer of slag 28 that is formed on top of the molten steel.

The oxygen which is introduced into the molten steel from the lance 10 reacts exothermically with oxidisable components or impurities in the molten steel and therefore provides heat to maintain the steel in its molten state. Further oxygen is supplied to the molten steel from the tuyeres 12. The oxygen that is supplied to the tuyeres 12 is able to be mixed selectively with one or both of argon and nitrogen. Accordingly, the partial pressure of the oxygen supplied to the molten steel is able to be adjusted by adjusting the mole fraction of argon and nitrogen which are mixed with the oxygen.

In one typical example of the operation of the converter shown in Figure 1 of the drawings, the particulate material which is introduced into the molten steel from the lance 10 is ferrochrome in fine particulate form. The ferrochrome typically contains 5 to 10% by weight of carbon. If desired, other alloying elements can be added to the molten steel via the lance 10. For example, nickel can be added in the form of ferronickel and molybdenum in the form of ferromolybdenum. Silicon in the form of ferrosilicon can also be added. The amounts of these alloying elements that are added will depend in part on the desired stainless steel composition. It is a noteworthy feature of the present invention that the addition of such alloying elements to the molten steel in the converter enables their addition to the electric arc furnace to be kept to a level which does not hinder the foaming of the slag therein or to be eliminated altogether.

Because the ferrochrome has a high content of carbon, not only does the operation of the converter shown in the drawing involve the dissolution of the ferrochrome in the molten steel, it also involves the removal of substantially all the carbon by reaction with oxygen. Both the dissolution of the ferrochrome and the refining reaction are aided by the fact that the oxygen jet that issues from the lance 10 creates in the vicinity of the region where it enters the molten steel a localised intensely superheated volume of molten metal. The high temperature in this region particularly favours the reaction between dissolved carbon and oxygen to form carbon monoxide. The lance is typically located on the vertical axis of the converter 2 such that the superheated region is central and does not substantially affect the temperature of the molten steel in the vicinity of the refractory lining 8. Accordingly, the introduction of oxygen into the molten steel from the lance 10 does not substantially increase the rate of erosion of this lining.

Similarly to conventional AOD refining of stainless steel, the reaction between oxygen and carbon in the molten steel is in competition with undesirable reactions between alloying elements (such as chromium) and oxygen to form oxides. Because ferrochrome has a significant carbon content, its addition to the molten steel introduces carbon at the same time as it is being removed. In this respect, the method according to the invention is different from a conventional AOD operation. Accordingly, it is preferred to discontinue the addition of the ferrochrome well before the end of the refining operation. Typically, the ferrochrome is introduced for a period which has a duration of no more than 75% of the total duration of the refining step in the converter 2. Once the introduction of ferrochrome is discontinued, the carbon levels in the converter 2 will fall relatively rapidly, and it is at this stage important to adjust the mole ratio of oxygen to diluent gases such as argon and nitrogen that are introduced into the molten metal so as to lower the partial pressure of oxygen. So doing helps to favour the oxidation of carbon over the oxidation of chromium.

In order to assess typical operating parameters for the refining step of the method according to the present invention, operation of the converter 2 has been modelled by us using a commercial Metsim software package. Results of the modelling are presented below. These relate to the refining of a batch of 150 tonnes of steel. In performing the modelling work, the following constraints were observed.

Total flow rate through submerged tuyeres was never allowed to exceed 6800 Nm³/h_{.}

Maximum temperatures were not allowed significantly to exceed 1708°C.

The lance was assumed to be of a size that can deliver a maximum gas flow rate of 6000 Nm³/h. (This flow rate is well within the range of conventional lances.)

Three different operating regimes were modelled. These were as follows with all percentages being by weight unless otherwise stated:
**Example 1:** Refining of a conventional stainless steel composition (18% by weight of chromium; 8% by weight of nickel and less than 0.1 % by weight of carbon) with top blowing of molecular oxygen at a rate of 6000 Nm³/h but with minimal ferrochrome introduction and then only in lump form. In this refining operation the carbon concentration is reduced from a starting value of 2.2 % by weight to the end value of less than 0.1 % by weight.
**Example 2:** Manufacture of stainless steel in accordance with the invention with introduction of oxygen through the lance 10 at a rate of 6000 Nm³/h and addition of 30 tonnes of ferrochrome of the following composition Fe- 36%; Cr - 53%; C - 6.5%; Si - 2.7%; balance - minor component and impurities. The starting composition of steel supplied to he converter was taken to be: Fe - 82%; Cr - 8.2%; Ni - 7.9%; C - 1.1 % and Si - 0.18%.
**Example 3:** As Example 2 but with the introduction of 45 instead of 30 tonnes of ferrochrome. The starting composition of the stainless steel was taken to be Fe - 90%; Ni - 8.8%; Cr - 0.18%; C - 0.35% and Si - 0.18%.

Whereas in Example 2, some addition of chromium during the melting step of the method according to the invention was needed, no such addition was necessary in Example 3.

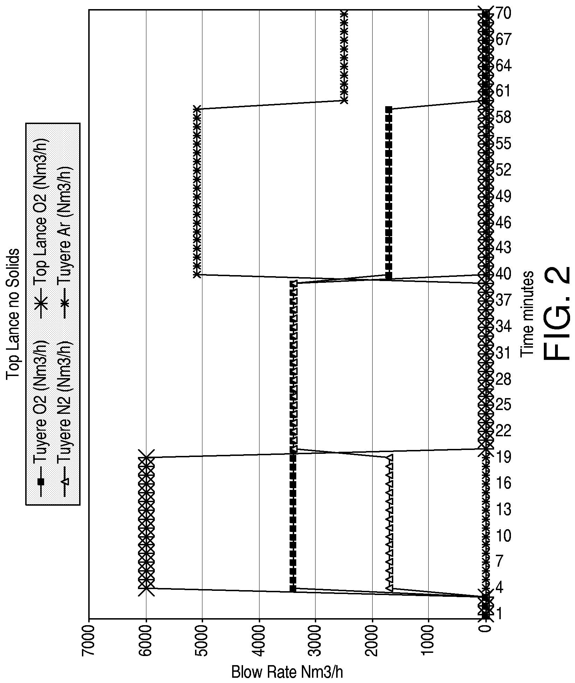

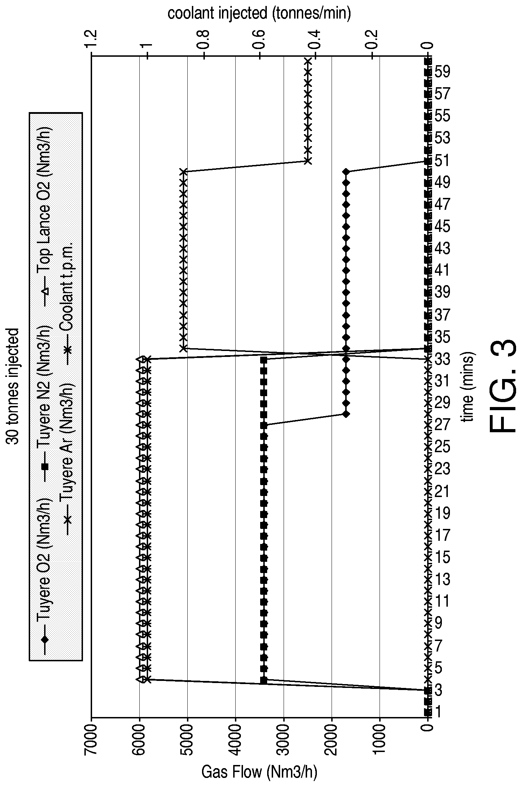

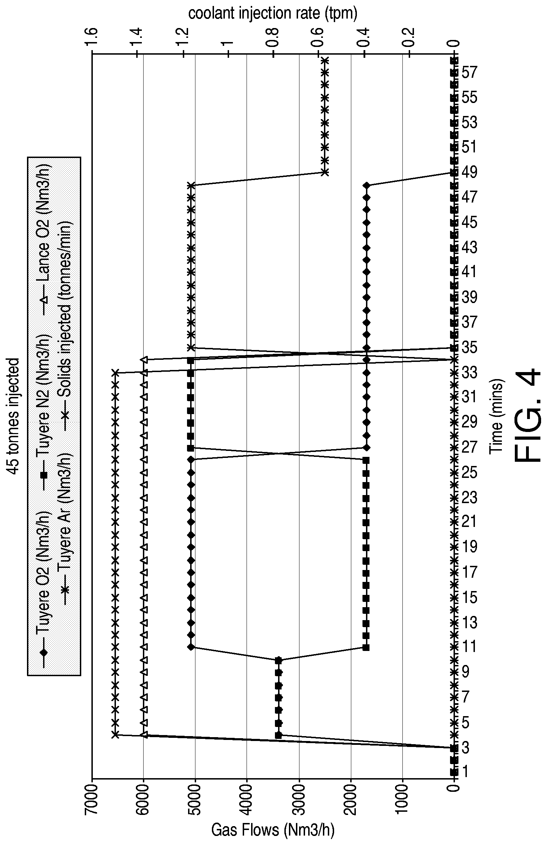

The relevant operating parameters are shown in Table 1 below. These operating parameters are also shown in Figures 2 to 4 which are graphical representations of Examples 1 to 3, respectively.

**TABLE 1**

| | Duration of heat (min) | Oxygen Introduction through lance | | | Oxygen Introduction through tuyeres | | | Argon Introduction through tuyeres | | | Nitrogen Introduction through tuyeres | | | Ferrochrome Introduction | | |
|---|---|---|---|---|---|---|---|---|---|---|---|---|---|---|---|---|
| | | Rate (Nm³/h) | Start time (min) | End Time (min) | Rate (Nm³/h) | Start time (min) | End time (min) | Rate (Nm³/h) | Start time (min) | End time (min) | Rate (Nm³/h) | Start time (min) | End time (min) | Total addition (tonne) | Start time (min) | End time (min) |
| Example 1 | 70 | 6000 | 4 | 19 | 3400 | 4 | 39 | 0 | 0 | 39 | 1700 | 4 | 19 | 2.3 | 5 | 5 |
| | | 0 | 20 | 70 | 1750 | 40 | 59 | 5100 | 41 | 59 | 3400 | 20 | 40 | | | |
| | | | | | 0 | 60 | 70 | 2500 | 60 | 70 | 0 | 41 | 70 | | | |
| Example 2 | 60 | 6000 | 4 | 33 | 3400 | 4 | 27 | 0 | 0 | 33 | 3400 | 4 | 33 | 30 | 5 | 34 |
| | | 0 | 34 | 60 | 1700 | 28 | 50 | 5100 | 34 | 50 | 0 | 34 | 60 | | | |
| | | | | | 0 | 51 | 60 | 2500 | 51 | 60 | | | | | | |
| Example 3 | 59 | 6000 | 4 | 34 | 3400 | 4 | 10 | 0 | 0 | 34 | 3400 | 4 | 10 | 45 | 5 | 34 |
| | | 0 | 35 | 59 | 5100 | 11 | 26 | 5100 | 35 | 48 | 1700 | 11 | 26 | | | |
| | | | | | 1700 | 27 | 49 | 2500 | 50 | 59 | 5100 | 27 | 34 | | | |
| | | | | | 0 | 50 | 59 | | | | 0 | 35 | 59 | | | |

The final metallurgical compositions obtained in each of Examples 1 to 4 are summarised in Table 2 below.

**Table 2**

| | Example 1 | Example 2 | Example 3 |
|---|---|---|---|
| %C at 45 mins | 0.24 | 0.17 | 0.15 |
| Temp C at 45 mins | 1683 | 1702 | 1688 |
| Max Temp | 1699 | 1711 | 1701 |
| Final %C | 0.09 | 0.09 | 0.1 |
| Final % Cr | 18.8 | 18.3 | 17.8 |
| Final % Ni | 8.4 | 8.6 | 8.5 |
| Final % Mn | 1.3 | 1.2 | 1.2 |
| Final Temp C | 1651 | 1662 | 1638 |
| Blow Time | 69 | 60 | 58 |

A comparison of the results obtained is set out in Table 3 below.

**Table 3**

| | Blow Time Mins | %C at Tap | %Cr | Tap Temp | Total Tuyere O2 Nm3 | Total Lance O2 Nm3 | O2/t total | N2/t | Ar/t | T max | Productivity tonnes per min |
|---|---|---|---|---|---|---|---|---|---|---|---|
| Example 1 | 69 | 0.09 | 18.8 | 1651 | 2606 | 1600 | 27.3 | 10.3 | 13.7 | 1699 | 2.23 |
| Example 2 | 60 | 0.09 | 18.4 | 1662 | 2011 | 3000 | 33.4 | 11.3 | 12.4 | 1711 | 2.5 |
| Example 3 | 58 | 0.1 | 17.8 | 1638 | 2380 | 3100 | 36.5 | 10.2 | 10.7 | 1701 | 2.58 |

It can be seen from the results set out in the Tables that surprisingly it is possible to reduce the overall blow time as the amount of ferrochrome introduced into the molten steel through the lance 10 is increased. This result is achieved by appropriately balancing the endothermic effect of the particulate ferrochrome with the exothermic reaction between oxygen and carbon. Thus, total rates of addition of molecular oxygen are higher when ferrochrome is being added than when it is not. Relative rates of addition of molecular oxygen, nitrogen and argon are adjusted so as to maintain conditions that favour oxidation of carbon over oxidation of chromium.

Instead of ferrochrome, it is possible to use an ore as the source of chromium for the stainless steel. One such ore is chromite which is a mixed oxide of iron and chromium. Since reduction of chromium oxide is endothermic, the high rates of injection that would be required in order to enable all the chromium to be added to the steel during the refining step make it desirable to add additional fuel and reductant. The additional fuel is preferably in the form of a solid material coinjected with the chromite. The additional fuel may be a particulate carbonaceous material. It is also desirable to introduce one or more deoxidisers such as ferrosilicon and ferroaluminium in order to facilitate the reduction of the chromium oxide to chromium metal. The endothermic reduction of the oxide can be at least partially compensated by increasing the specific oxygen delivery rate to increase the rate of heat generation associated with decarburisation. Accordingly, in such alternative methods according to the invention it remains possible to operate the electric arc furnace mentioned above under conditions which give rise to a slag that can be formed into a foam.

## Claims

1. A method of making stainless steel, comprising the steps of:
a) melting in an electric arc furnace a charge of steel;
b) refining in a converter the resultant molten steel at least in part by blowing molecular oxygen into the molten steel from a lance positioned above the surface of the molten steel; and
c) during the refining step introducing into the molten steel from the lance at least one first metallurgically acceptable particulate material selected from chromium metal, chromium-containing alloys and chromium ores;
wherein the steel is melted under foamy slag conditions, and wherein no chromium metal, chromium-containing alloy or chromium ore is added to the charge of steel that is melted in the said step (a).

2. A method according to claim 1, wherein the molecular oxygen is ejected from the lance at a supersonic velocity.

3. A method according to claim 1 or claim 2, wherein the said first particulate material is conveyed to the lance in a carrier gas.

4. A method according to any one of the preceding claims, in which the lance comprises a first pipe for ejecting the molecular oxygen and a second pipe for ejecting the said first particulate material.

5. A method according to claim 4, wherein the first and second pipes are coaxial, with the first pipe surrounding the second pipe.

6. A method according to any one of the preceding claims, wherein the molecular oxygen creates a localised, intensely superheated region in the molten steel into which the first particulate material is introduced.

7. A method according to any one of the preceding claims, in which the said first particulate material comprises chromium oxide.

8. A method according to claim 7, in which there is introduced into the molten steel through the lance a second particulate material comprising a mixture of carbon and at least one deoxidising agent.

9. A method according to claim 8, in which the deoxidising agent is ferrosilicon, ferromanganese, aluminium or ferroaluminium.

10. A method according to any one of claims 1 to 6, in which the said first particulate material comprises ferrochrome.

11. A method according to claim 10, wherein the refining step comprises a first part in which all the said first particulate material is introduced into the molten steel, and a second part in which no first particulate material is introduced into the molten steel.

12. A method according to any one of the preceding claims, additionally including the step of introducing at least one third particulate material from the lance into the molten steel, wherein the said third particulate material is selected from nickel metal, nickel-containing alloys, nickel ores, molybdenum metal, molybdenum-containing alloys and molybdenum ores.

13. A method according to any one of the preceding claims, additionally including the step of blowing into the molten steel during the refining step further molecular oxygen through at least tuyere terminating below the level of the molten steel, and at least one other gas selected from argon, nitrogen and stem, at least some of the other gas being introduced through the same or a different tuyere from the further molecular oxygen.

14. A method according to any one of the preceding claims, wherein the said first particulate material consists of fine particles having a mean particle size of 1 mm or less.

15. A method according to any one of the preceding claims, wherein in the said step (b) the rate of introduction of the first and any other metallurgically acceptable particulate material is balanced against the total rate of introduction of the molecular oxygen so as to maintain the molten steel at a temperature not in excess of 1710°C.

## Patentansprüche

1. Verfahren zur Herstellung von Edelstahl, umfassend die folgenden Schritte:
a) Schmelzen einer Stahlcharge in einem Lichtbogenofen;
b) Veredeln der resultierenden Stahlschmelze, mindestens teilweise, in einem Wandler durch Blasen von molekularem Sauerstoff aus einer Lanze, die oberhalb der Oberfläche der Stahlschmelze angeordnet ist, in die Stahlschmelze; und
c) während des Veredelungsschrittes, Einleiten in die Stahlschmelze aus einer Lanze mindestens eines ersten metallurgisch annehmbaren Partikelmaterials, das ausgewählt ist aus Chrommetall, chromhaltigen Legierungen und Chromerzen;
wobei der Stahl unter Schaumschlackebedingungen geschmolzen wird und wobei kein Chrommetall, chromhaltige Legierung oder Chromerz der Stahlcharge, die in Schritt (a) geschmolzen wird, zugegeben wird.

2. Verfahren nach Anspruch 1, wobei der molekulare Sauerstoff mit Überschallgeschwindigkeit aus der Lanze ausgestoßen wird.

3. Verfahren nach Anspruch 1 oder Anspruch 2, wobei das erste Partikelmaterial in einem Trägergas zur Lanze befördert wird.

4. Verfahren nach einem der vorhergehenden Ansprüche, wobei die Lanze ein erstes Rohr zum Ausstoßen von molekularem Sauerstoff und ein zweites Rohr zum Ausstoßen des ersten Partikelmaterials umfasst.

5. Verfahren nach Anspruch 4, wobei das erste und das zweite Rohr koaxial sind, wobei das erste Rohr das zweite Rohr umgibt.

6. Verfahren nach einem der vorhergehenden Ansprüche, wobei der molekulare Sauerstoff eine lokalisierte, intensiv überhitzte Region in der Stahlschmelze erzeugt, in die das erste Partikelmaterial eingeleitet wird.

7. Verfahren nach einem der vorhergehenden Ansprüche, wobei erste Partikelmaterial Chromoxid umfasst.

8. Verfahren nach Anspruch 7, wobei durch die Lanze ein zweites Partikelmaterial in die Stahlschmelze eingeleitet wird, das eine Mischung aus Kohlenstoff und mindestens einem Desoxidationsmittel umfasst.

9. Verfahren nach Anspruch 8, wobei das Desoxidationsmittel Ferrosilicium, Ferromangan, Aluminium oder Ferroaluminium ist.

10. Verfahren nach einem der Ansprüche 1 bis 6, wobei das erste Partikelmaterial Ferrochrom umfasst.

11. Verfahren nach Anspruch 10, wobei der Veredelungsschritt einen ersten Teil umfasst, in dem das gesamte erste Partikelmaterial in die Stahlschmelze eingeleitet wird, und einen zweiten Teil, in dem kein erstes Partikelmaterial in die Stahlschmelze eingeleitet wird.

12. Verfahren nach einem der vorhergehenden Ansprüche, zusätzlich umfassend den Schritt des Einleitens mindestens eines dritten Partikelmaterials aus der Lanze in die Stahlschmelze, wobei das dritte Partikelmaterial ausgewählt ist aus Nickelmetall, nickelhaltigen Legierungen, Nickelerzen, Molybdänmetall, Molybdänlegierungen und Molybdänerzen.

13. Verfahren nach einem der vorhergehenden Ansprüche, das zusätzlich den Schritt beinhaltet, bei dem während des Veredelungsschrittes durch mindestens eine Blasdüse, die unterhalb des Pegels der Stahlschmelze endet, weiterer molekularer Sauerstoff und mindestens ein anderes Gas , das ausgewählt ist aus Argon, Stickstoff und Faulgas und mindestens einiges von dem anderen Gas, das durch die gleiche oder eine andere Blasdüse vom weiteren molekularen Sauerstoff eingeleitet wird, in die Stahlschmelze geblasen wird.

14. Verfahren nach einem der vorhergehenden Ansprüche, wobei das erste Partikelmaterial aus feinen Partikeln besteht, die eine mittlere Partikelgröße von 1 mm oder weniger aufweisen.

15. Verfahren nach einem der vorhergehenden Ansprüche, wobei im Schritt (b) die Einleitungsrate des ersten und jedes anderen metallurgisch annehmbaren Partikelmaterials mit der Gesamteinleitungsrate von molekularem Sauerstoff ausgeglichen wird, um die Stahlschmelze bei einer Temperatur von nicht mehr als 1710°C zu halten.

## Revendications

1. Procédé de fabrication d'acier inoxydable, comprenant les étapes consistant à :
a) faire fondre dans un four à arc électrique une charge d'acier ;
b) affiner dans un convertisseur l'acier fondu résultant au moins en partie en soufflant de l'oxygène moléculaire dans l'acier fondu à partir d'une lance positionnée au-dessus de la surface de l'acier fondu ; et
c) pendant l'étape d'affinage, introduire dans l'acier fondu à partir de la lance au moins un premier matériau particulaire acceptable sur le plan métallurgique choisi parmi le chrome métallique, les alliages contenant du chrome et les minerais de chrome ;
dans lequel l'acier est fondu dans des conditions de laitier moussant, et dans lequel ni chrome métallique, ni alliage contenant du chrome, ni minerai de chrome ne sont ajoutés à la charge d'acier qui est fondue à ladite étape (a).

2. Procédé selon la revendication 1, dans lequel l'oxygène moléculaire est éjecté de la lance à une vitesse supersonique.

3. Procédé selon la revendication 1 ou la revendication 2, dans lequel ledit premier matériau particulaire est transporté jusqu'à la lance dans un gaz vecteur.

4. Procédé selon l'une quelconque des revendications précédentes, dans lequel la lance comprend un premier tuyau pour éjecter l'oxygène moléculaire et un deuxième tuyau pour éjecter ledit premier matériau particulaire.

5. Procédé selon la revendication 4, dans lequel les premier et deuxième tuyaux sont coaxiaux, avec le premier tuyau entourant le deuxième tuyau.

6. Procédé selon l'une quelconque des revendications précédentes, dans lequel l'oxygène moléculaire crée une région localisée intensément surchauffée dans l'acier fondu dans laquelle le premier matériau particulaire est introduit.

7. Procédé selon l'une quelconque des revendications précédentes, dans lequel ledit premier matériau particulaire comprend de l'oxyde de chrome.

8. Procédé selon la revendication 7, dans lequel est introduit dans l'acier fondu par la lance un deuxième matériau particulaire comprenant un mélange de carbone et d'au moins un désoxydant.

9. Procédé selon la revendication 8, dans lequel le désoxydant est le ferrosilicium, le ferromanganèse, l'aluminium ou le ferroaluminium.

10. Procédé selon l'une quelconque des revendications 1 à 6, dans lequel ledit premier matériau particulaire comprend du ferrochrome.

11. Procédé selon la revendication 10, dans lequel l'étape d'affinage comprend une première partie dans laquelle tout ledit premier matériau particulaire est introduit dans l'acier fondu, et une deuxième partie dans laquelle le premier matériau particulaire n'est pas introduit dans l'acier fondu.

12. Procédé selon l'une quelconque des revendications précédentes, comportant également l'étape d'introduction d'au moins un troisième matériau particulaire à partir de la lance dans l'acier fondu, ledit troisième matériau particulaire étant choisi parmi le nickel métallique, les alliages contenant du nickel, les minerais de nickel, le molybdène métallique, les alliages contenant du molybdène et les minerais de molybdène.

13. Procédé selon l'une quelconque des revendications précédentes, comportant également l'étape de soufflage dans l'acier fondu pendant l'étape d'affinage d'oxygène moléculaire supplémentaire par au moins une tuyère se terminant au-dessous du niveau de l'acier fondu, et d'au moins un autre gaz choisi parmi l'argon, l'azote et la vapeur d'eau, au moins une partie de l'autre gaz étant introduite par la même tuyère ou une tuyère différente de l'oxygène moléculaire supplémentaire.

14. Procédé selon l'une quelconque des revendications précédentes, dans lequel ledit premier matériau particulaire consiste en de fines particules ayant une taille moyenne de particules de 1 mm ou moins.

15. Procédé selon l'une quelconque des revendications précédentes dans lequel, à ladite étape (b), la vitesse d'introduction du premier et de tout autre matériau particulaire acceptable sur le plan métallurgique est équilibrée par la vitesse totale d'introduction de l'oxygène moléculaire de manière à maintenir l'acier fondu à une température ne dépassant pas 1710 °C.
